# EUROPÄISCHE PATENTSCHRIFT

(11) **EP 2 888 066 B1**
(45) Veröffentlichungstag und Bekanntmachung des Hinweises auf die Patenterteilung: **17.02.2021**
(21) Anmeldenummer: 13773173.3
(22) Anmeldetag: 20.08.2013
(51) Int. Cl.: B23B 51/04

(54) **EINLIPPENTIEFLOCHBOHRER**
SINGLE-LIP DEEP-HOLE DRILL
FORET À UNE LÈVRE POUR TROU PROFOND

(30) Priorität: 24.08.2012 DE 102012016660
(43) Veröffentlichungstag der Anmeldung: 01.07.2015
(73) Patentinhaber: botek Präzisionsbohrtechnik GmbH, 72585 Riederich (DE)
(72) Erfinder: WENZELBURGER, Jürgen, 72555 Metzingen (DE); DEEG, Jürgen, 72555 Metzingen (DE)
(74) Vertreter: Jakelski & Althoff Patentanwälte PartG mbB
(86) Internationale Anmeldenummer: PCT/DE2013/000467
(87) Internationale Veröffentlichungsnummer: WO 2014/029380

(56) Entgegenhaltungen:
- WO-A1-2009/012253
- WO-A2-2006/024287
- DE-A1- 1 477 719
- DE-A1- 3 314 718
- DE-A1- 4 338 545
- DE-U1- 7 905 118
- DE-U1- 20 316 884
- DE-U1-202004 013 616
- DE-U1-202005 016 055
- DE-U1-202009 012 566
- DE-U1-202009 012 566
- GB-A- 261 651
- JP-A- H0 825 120
- JP-A- S63 102 813
- US-A1- 2011 150 589

## Beschreibung

Die vorliegende Erfindung betrifft einen Einlippentieflochbohrer mit niedriger Schnittkraft, gemäß den Oberbegriffen der Ansprüche 1, 2 und 3. Ein solcher Einlippentieflochbohrer ist aus der JP H08 25120 A bekannt.

### Stand der Technik

Ein Einlippenbohrer, auch Einlippentieflochbohrer genannt, geht beispielsweise aus der DE 79 22 246 U1 hervor.

Einlippenbohrer werden eingesetzt, um Bohrungen in Werkstücke einzubringen. Verschiedene Arten von Einlippenbohrern sind in den VDI-Richtlinien VDI 3210 und VDI 3208 dargestellt. Einlippenbohrer werden hauptsächlich zur Herstellung von Bohrungen mit vergleichsweise kleinem Durchmesser eingesetzt, der vorwiegend im Bereich von 0,5 mm bis 50 mm liegt, wobei die Bohrtiefe jedoch ein Vielfaches des Bohrdurchmessers betragen kann. Übliche Werte für die Bohrtiefe liegen im Bereich des 20-fachen bis 100-fachen des Bohrdurchmessers, können jedoch auch darüber oder darunter liegen.

Allgemein bestehen Einlippenbohrer aus einem Bohrkopf und einem Bohrerschaft mit einem Einspann-Ende. Am Bohrkopf ist zumindest eine Schneide ausgebildet, die sich von der Bohrermittelachse bis zum Bohrerumfang erstreckt. Weiterhin können am Umfang des Bohrkopfes angeordnete Führungselemente vorgesehen sein. Der Bohrkopf und der Bohrerschaft sind entweder form- oder stoffschlüssig miteinander verbunden oder sie sind aus einem Stück hergestellt. Vorhanden ist wenigstens ein im Bohrerschaft und Bohrkopf verlaufender Kanal, der am Bohrkopf und am Einspann-Ende Öffnungen aufweist. Durch diesen Kanal wird vom Einspann-Ende ausgehend Kühlmittel unter Druck zugeführt, das am Bohrkopf austritt und neben der Kühlung der Schneide und der Führungselemente insbesondere die Aufgabe hat, die beim Bohren entstehenden Späne durch eine im Bohrkopf und im Bohrerschaft vorhandene V-förmige Spanabfuhrnut herauszuspülen.

Einlippenbohrer werden üblicherweise maschinenseitig an ihrem Einspann-ende in einer dafür vorgesehenen Aufnahme in einer Spindel aufgenommen und von der Spindel um die Bohrermittelachse in Rotation versetzt. Gleichzeitig wird das Werkzeug entlang seiner Mittelachse mit einem definierten Vorschub pro Umdrehung auf ein Werkstück zu bewegt. Dabei dringt der Einlippenbohrer in das Werkstück ein und an der am Bohrkopf angeordneten Schneide wird das Material des Werkstücks abgespant und in Form von Spänen vom Werkstück abgetrennt. Die dabei entstehenden Späne werden durch das Kühlmittel, welches durch wenigstens einen innenliegenden Kanal über die Spindel zugeführt wird, entlang einer Spanabfuhrnut aus der Bohrung ausgespült. Die Spanabfuhrnut schließt üblicherweise einen Winkel von ca. 90° bis 130° ein.

Es ist auch möglich, das Werkstück die Rotation und/oder die Vorschubbewegung ausführen zu lassen oder die Rotation und/oder die Vorschubbewegung zum Teil durch das Werkzeug und zum Teil durch das Werkstück auszuführen.

Einlippenbohrer finden als Vollbohrwerkzeuge oder als Aufbohrwerkzeuge Verwendung. Vollbohrwerkzeuge dienen dazu, in ein Vollmaterial Bohrungen einzubringen. Beim Vollbohren wird der gesamte kreisförmige Querschnitt der Bohrung vom Bohrwerkzeug zerspant. Aufbohrwerkzeuge werden eingesetzt, um den Durchmesser einer bereits in einem Werkstück vorhandenen Bohrung zu vergrößern. Die bereits vorhandene "Bohrung" oder Öffnung kann dabei gebohrt, gegossen oder anderweitig hergestellt worden sein und ist in ihrem Durchmesser kleiner als die vom Bohrwerkzeug herzustellende Bohrung. Beim Aufbohren wird ein ringförmiger Querschnitt zerspant.

Einlippenbohrer werden vorzugsweise eingesetzt, um Bohrungen in Werkstücke einzubringen, die mit anderen Fertigungsverfahren nicht oder nicht wirtschaftlich herstellbar sind. Oft werden diese Werkstücke in großen Serien gefertigt. Verbesserungen, die zu einer Steigerung der Fertigungsgeschwindigkeit führen, sind deshalb generell wünschenswert und selbst kleine Verbesserungen führen zu signifikanten Einsparungen bei den Fertigungskosten.

Die Fertigungsgeschwindigkeit ist bei Bohrwerkzeugen durch das Produkt aus Vorschub pro Umdrehung des Werkzeuges und der Anzahl der Umdrehungen pro Minute definiert und wird allgemein als Vorschubgeschwindigkeit bezeichnet.

Übliche und verbreitet verwendete Schneidengeometrien, auch Standardanschliffe genannt sind, sind beispielsweise in der VDI-Richtlinie VDI 3208 dargestellt. Bei diesen Standardanschliffen ist die Schneide in zwei gerade Teil-Schneiden aufgeteilt, wobei die äußere, an den Umfang des Bohrkopfes angrenzende, Teil-Schneide einen Einstellwinkel größer 90° aufweist. Üblicherweise liegt der Einstellwinkel im Bereich von 110° bis 130°. Die innere, der Bohrermittelachse am nächsten liegende, Teil-Schneide weist dagegen einen Einstellwinkel kleiner 90° auf. Dieser Einstellwinkel liegt üblicherweise im Bereich von 75° bis 60°. Der Einstellwinkel ist dabei als Winkel zwischen der Bohrermittelachse und der Tangente an die Schneide definiert. Die Teil-Schneiden treffen an der Bohrerspitze in einem Abstand vom Umfang des Bohrers aufeinander, der üblicherweise 1/5 bis 1/3 des Bohrerdurchmessers entspricht. Diese Standardanschliffe sind durch die geraden Teil-Schneiden besonders einfach herzustellen und können durch Variation der Einstellwinkel und des Abstandes der Bohrerspitze vom Umfang des Bohrkopfes an viele verschiedene Bearbeitungssituationen angepasst werden.

Eine Grenze für die Steigerung der Vorschubgeschwindigkeit ist bei Einlippenbohrern entweder durch eine Überlastung des Werkzeugs durch zu hohe Zerspankräfte gegeben, was zum Werkzeugbruch führen kann, und/oder dadurch, dass sich die Späne wegen ungünstiger Spanform nicht mehr durch die Spanabfuhrnut abführen lassen und es zu einem Spänestau, d. h. Verklemmen der Späne zwischen Spanabfuhrnut und Bohrungswand, kommen kann, was ebenso zum Werkzeugbruch führen kann.

Der Spanwinkel von Einlippenbohrern beträgt üblicherweise 0°, wodurch beim Zerspanen des Werkstoffes vergleichsweise hohe Schnittkräfte und Verschleißkräfte auftreten. Die DE 103 16 116 A1 beschreibt einen Einlippenbohrer, entlang dessen Schneide ein Spanformer eingebracht ist. Der Spanformer besitzt einen positiven Spanwinkel und einen negativen Auslaufwinkel, wodurch beim Zerspanen niedrigere Kräfte und durch den Auslauf eine Formung der Späne erzielt wird. Damit kann eine höhere Vorschubgeschwindigkeit erzielt werden.

DE 20 2009 012 566 U1 offenbart einen Einlippenbohrer, der eine streng konvex gekrümmte Schneide aufweist. Dadurch wird eine günstige Spanform erzielt, die ein Verklemmen der Späne verhindert und somit höhere Vorschubgeschwindigkeiten ermöglicht. Dieser Einlippenbohrer besitzt jedoch einen Spanwinkel von 0° und damit vergleichsweise hohe Zerspankräfte. Diese begrenzen die erzielbare Vorschubgeschwindigkeit beim Bohren, da sie zum Werkzeugbruch durch Überlastung führen können.

Es ist Aufgabe der vorliegenden Erfindung, einen Einlippenbohrer bereitzustellen, welcher eine niedrige Schnittkraft und eine lange Standzeit aufweist. Insbesondere soll dieser Einlippenbohrer ohne einen Spanformer oder Spanbrecher auskommen.

### Offenbarung der Erfindung

Diese Aufgabe wird durch die Einlippentieflochbohrer gemäß den unabhängigen Ansprüchen 1 bis 3 gelöst, die wenigstens eine am Bohrkopf ausgebildete Schneide aufweisen. Die Spanfläche des Bohrkopfes ist über mindestens 75 % ihrer Breite, vorzugsweise über mindestens 95 % ihrer Breite, und im Wesentlichen über ihre gesamte Länge bis einschließlich zu der Schneide hin konkav ausgebildet. Durch den erfindungsgemäßen Einlippenbohrer ist hierdurch beim Bohrvorgang eine reduzierte Schnittkraft gegenüber einem herkömmlichen Einlippenbohrer desselben Durchmessers realisierbar. Das bedeutet gleichzeitig, dass bei gleicher Vorschubkraft und gleichem Drehmoment des Einlippenbohrers im Vergleich zum herkömmlichen Einlippenbohrer ein höherer Vorschub erreicht werden kann. Außerdem führt die erfindungsgemäße Geometrie des Einlippenbohrers zu einer Verringerung des Bohrungsmittenverlaufs. Dies bedeutet, dass die Abweichung zwischen dem Bohrungseintrittspunkt und dem Bohrungsaustrittspunkt in einem zu durchbohrenden Körper gegenüber einem herkömmlichen Einlippenbohrer verringert wird. Da der Bohrungsmittenverlauf eines Einlippenbohrers mit abnehmendem Bohrdurchmesser größer wird, ist der erfindungsgemäße Einlippenbohrer besonders gut dazu geeignet, um Bohrungen mit geringem Durchmesser, wie sie beispielsweise bei Einspritzsystemen von Verbrennungsmotoren üblich sind, anzufertigen. Schließlich führt die erfindungsgemäße Bohrergeometrie zu einer erhöhten Bohrerstandzeit im Vergleich zu herkömmlichen Einlippenbohrern.

Die erfindungsgemäßen Effekte sind besonders ausgeprägt, wenn die Spanfläche des Bohrkopfes über einen möglichst großen Teil ihrer Breite konkav ausgebildet ist. Bevorzugt endet die konkave Krümmung der Spanfläche an der Bohrermittelachse. Um eine einfache Fertigung des Bohrkopfes zu ermöglichen, ist es erfindungsgemäß bevorzugt, dass ein Bereich der Spanfläche sich über die Bohrermittelachse hinweg erstreckt. Der jenseits der Bohrermittelachse liegende Bereich der Spanfläche ist dabei insbesondere nicht gekrümmt, was bei der Herstellung des Bohrkopfes einen einfachen Auslauf des hierfür verwendeten Bearbeitungswerkzeugs ermöglicht.

Die konkave Krümmung der Spanfläche kann erfindungsgemäß auf unterschiedliche Weise realisiert werden. In einer Ausführungsform der Erfindung verläuft die Krümmung der Spanfläche streng konkav. In einer anderen Ausführungsform der Erfindung besteht die konkave Krümmung der Spanfläche aus mindestens drei ebenen Teilspanflächen, die gemeinsam eine konkave Kontur bilden. Hierbei verläuft die der Bohrermittelachse am nächsten liegende Teilspanfläche insbesondere entlang dem Radius des Bohrkopfes.

Die Schneide des erfindungsgemäßen Einlippenbohrers weist insbesondere einen positiven Spanwinkel auf, der sich durch die konkave Fläche in Verbindung mit dem Einstellwinkel der Schneiden ergibt. Dies kann während des Bohrvorgangs zur Bildung eines langen Spans führen. Damit dient die erfindungsgemäße Geometrie des Einlippenbohrers einem anderen Zweck als beispielsweise bekannte Spanbrecher, welche dazu vorgesehen sind, Späne zu formen, die klein genug sind, um sicher bewegt zu werden. Ein Spanbrecher entlang der Schneide des Bohrkopfes wird erfindungsgemäß nicht benötigt. Es ist daher bevorzugt, dass der erfindungsgemäße Einlippenbohrer keinen Spanbrecher aufweist.

Grundsätzlich kann die Schneide des erfindungsgemäßen Einlippenbohrers jeden beliebigen Anschliff aufweisen. Es ist allerdings bevorzugt, dass die Schneide eine streng konvex gekrümmte Kontur aufweist und dass ein Punkt der konvexen Kontur, der am weitesten in Vorschubrichtung gelegen ist, in einem Abstand zum Umfang des Bohrkopfes angeordnet ist, der einem Fünftel bis einem Drittel, insbesondere einem Viertel, des Bohrdurchmessers entspricht, z. B. entsprechend DE 20 2009 012 566 U1.

Weiterhin ist es bevorzugt, dass der Bohrkopf zumindest teilweise mit einer Hartstoffschicht beschichtet ist. Die Beschichtung des Bohrkopfes eines herkömmlichen Einlippenbohrers mittels einer Hartstoffschicht ist insofern problematisch, als beim Einschleifen eines Spanbrechers in die Schneide ein Teil der Hartstoffschicht entfernt wird und anschließend bei einem weiteren Bearbeitungsschritt erneut aufgetragen werden muss. Da der bevorzugte Einlippenbohrer keinen Spanbrecher benötigt, ist er in einer hartstoffbeschichteten Ausführung einfach herstellbar und gleichzeitig auch einfach nachschleifbar.

Ein weiterer sehr großer Vorteil beim Nachschleifen des erfindungsgemäßen Einlippenbohrers ist dadurch gegeben, dass beim Nachschleifen nur der verschlissene Teil des Anschliffs abgeschliffen werden muss. Im Gegensatz dazu muss bei einem Einlippenbohrer mit Spanbrecher immer der komplette Spanbrecher zurückgesetzt werden.

### Kurze Beschreibung der Zeichnungen

Fig. 1 zeigt eine isometrische Darstellung eines Einlippenbohrers gemäß dem Stand der Technik.
Fig. 2 zeigt ein Detail aus Fig. 1.
Fig. 3 zeigt eine Seitenansicht des Einlippenbohrers gemäß Fig. 1.
Fig. 4 zeigt eine Aufsicht auf den Bohrkopf des Einlippenbohrers gemäß Fig. 1 entlang der Bohrermittelachse.
Fig. 5 zeigt eine Schnittansicht des Bohrkopfes des Einlippenbohrers gemäß Fig. 1.
Fig. 6 zeigt eine Schnittansicht des Bohrerschaftes des Einlippenbohrers gemäß Fig. 1.
Fig. 7 zeigt eine isometrische Ansicht eines Einlippenbohrers gemäß einer bevorzugten Ausführungsform der Erfindung.
Fig. 8 zeigt ein Detail aus Fig. 7.
Fig. 9 zeigt eine Seitenansicht des Einlippenbohrers gemäß Fig. 7.
Fig. 10 zeigt eine Aufsicht auf den Bohrkopf des Einlippenbohrers gemäß Fig. 7 entlang der Bohrermittelachse.
Fig. 11 zeigt eine Schnittansicht des Bohrkopfes des Einlippenbohrers gemäß Fig. 7.
Fig. 12 zeigt eine Schnittansicht des Bohrerschaftes des Einlippenbohrers gemäß Fig. 7.
Fig. 13 zeigt eine Seitenansicht des Bohrkopfes des Einlippenbohrers gemäß Fig. 7.
Fig. 14 ist eine Schnittansicht von Fig. 13.
Fig. 15 ist eine andere Schnittansicht von Fig. 13.
Fig. 16 ist noch eine andere Schnittansicht von Fig. 13.
Fig. 17 zeigt einen Einlippenbohrer gemäß einer anderen Ausführungsform der Erfindung.
Fig. 18 zeigt ein Detail aus Fig. 17.
Fig. 19 zeigt eine Seitenansicht des Einlippenbohrers gemäß Fig. 17.
Fig. 20 zeigt eine Aufsicht auf den Bohrkopf des Einlippenbohrers gemäß Fig. 17 entlang der Bohrermittelachse.
Fig. 21 zeigt eine Schnittansicht des Bohrkopfes des Einlippenbohrers gemäß Fig. 17.
Fig. 22 zeigt eine von Schnittansicht des Bohrerschaftes des Einlippenbohrers gemäß Fig. 17.
Fig. 23 zeigt eine Seitenansicht des Bohrkopfes des Einlippenbohrers gemäß Fig. 17.
Fig. 24 ist eine Schnittansicht von Fig. 23.
Fig. 25 ist eine andere Schnittansicht von Fig. 23.
Fig. 26 ist noch eine andere Schnittansicht von Fig. 23.

### Ausführungsformen der Erfindung

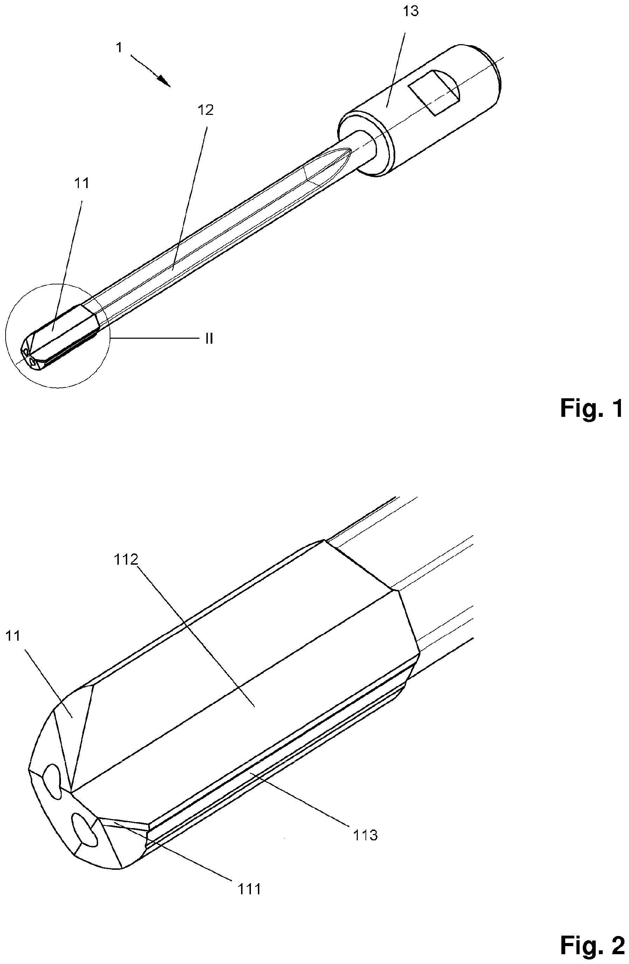

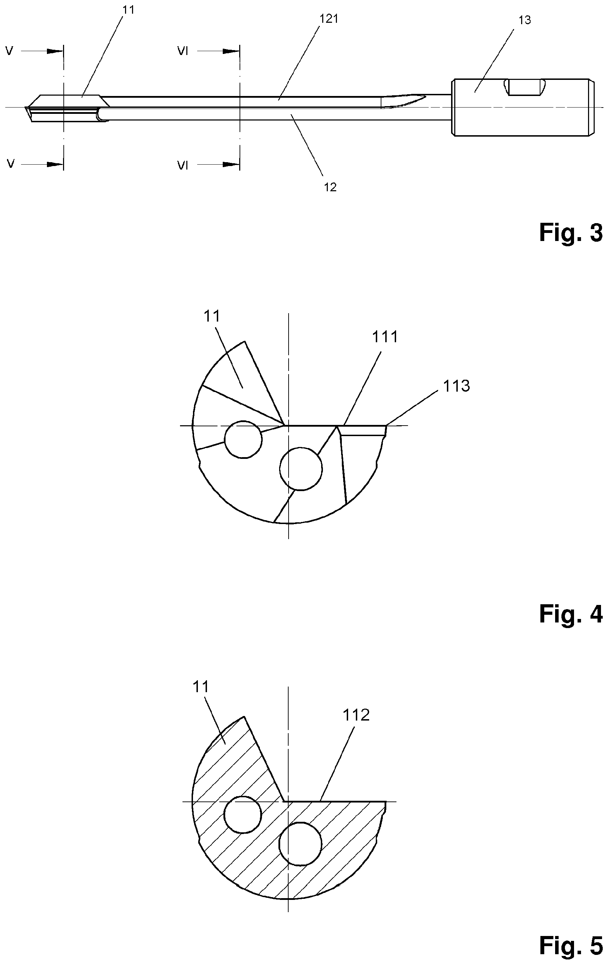

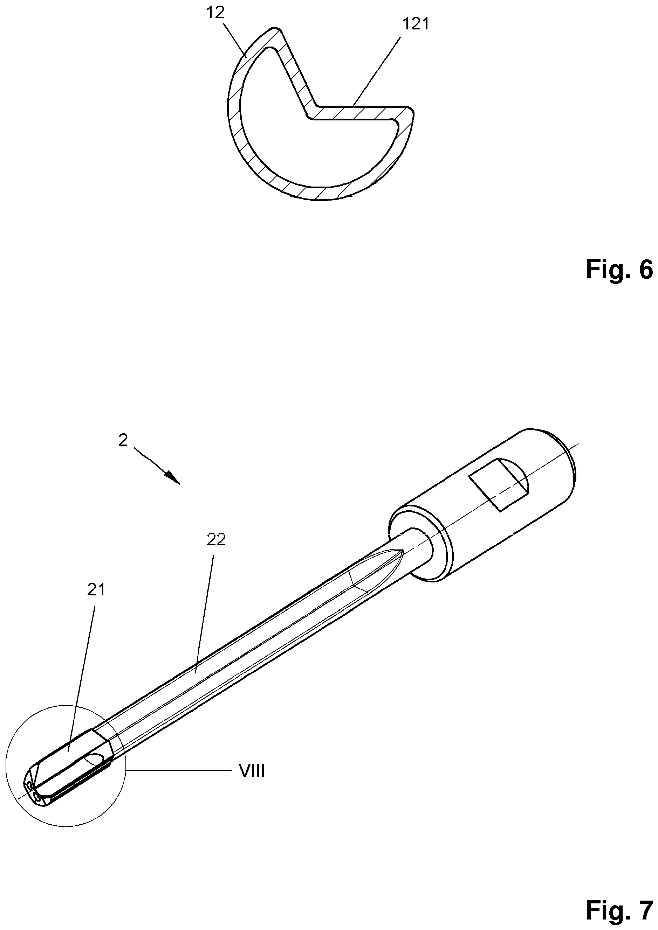

Ein herkömmlicher Einlippenbohrer 1 gemäß dem Stand der Technik ist in den Fig. 1 bis 3 dargestellt. Er besteht aus einem Bohrkopf 11, einem Bohrerschaft 12 und einem Einspann-Ende 13 zur Aufnahme in einem nicht gezeigten Bohrfutter. Eine Aufsicht auf seinen Bohrkopf 11 entlang der Bohrermittelachse, d.h. entgegen der Vorschubrichtung, ist in Fig. 4 gezeigt. Ein Schnitt des Bohrkopfes 11 entlang der Linie, welche in Fig. 3 mit V ist bezeichnet ist, ist in Fig. 5 dargestellt. Ein Schnitt des Bohrerschaftes 12 entlang der Linie, welche in Fig. 3 mit VI bezeichnet ist, ist in Fig. 6 dargestellt. Wie aus den Fig. 4 bis 6 zu erkennen ist, haben sowohl die in Fig. 4 zu sehende Bohrerschneide 111 als auch die in Fig. 5 dargestellte Spanfläche 112 sowie die in Fig. 6 zu erkennende Spanabfuhrnut 121 des Einlippenbohrers 1 jeweils eine ebene Oberfläche. An die Schneide 111 schließt sich die Nebenschneide 113 an, die sich im Wesentlichen in Achsrichtung des Bohrers erstreckt und die Spanfläche zum Umfang des Bohrers hin begrenzt. Ein derartiger Einlippenbohrer 1 hat einen Spanwinkel von 0°. Ein positiver Spanwinkel kann nur durch das Einschleifen eines Spanbrechers in die Schneide 111 erreicht werden. Die Vorschubkraft für einen derartigen Einlippenbohrer 1 bei einem Durchmesser von 10 mm beträgt 500 N und das Drehmoment beträgt 2,5 Nm. Diese Werte werden im Versuch bei der Bearbeitung von Vergütungsstahl ermittelt. Dabei erreicht ein solcher Einlippenbohrer 1 eine Vorschubgeschwindigkeit von 100 mm/min.

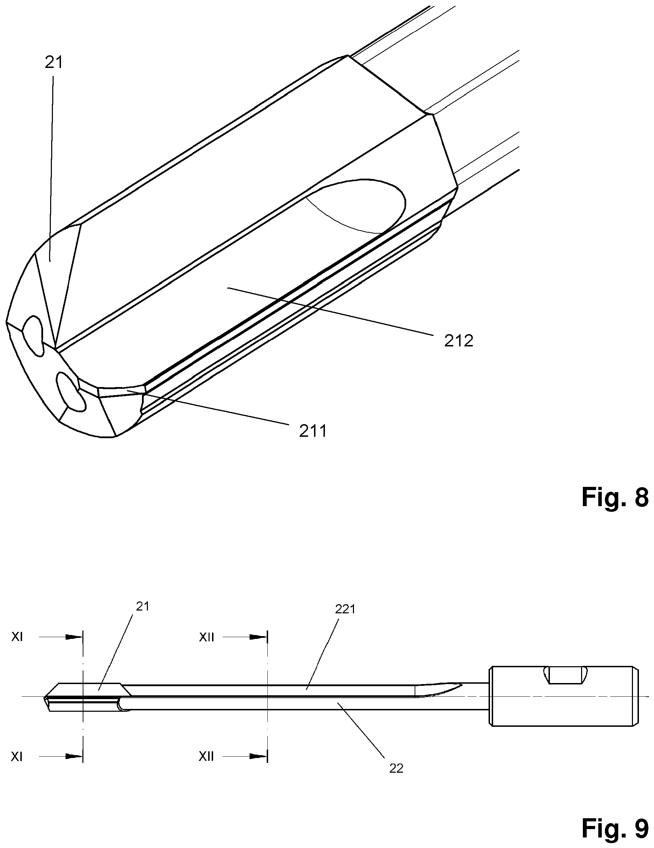

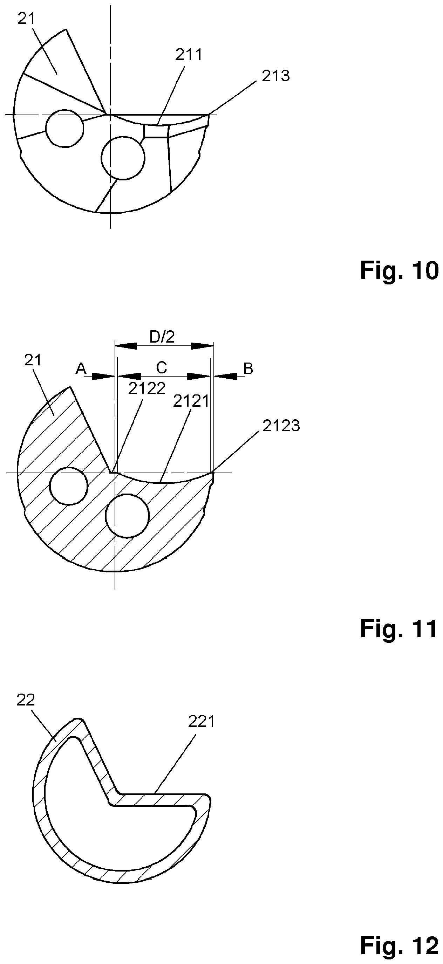

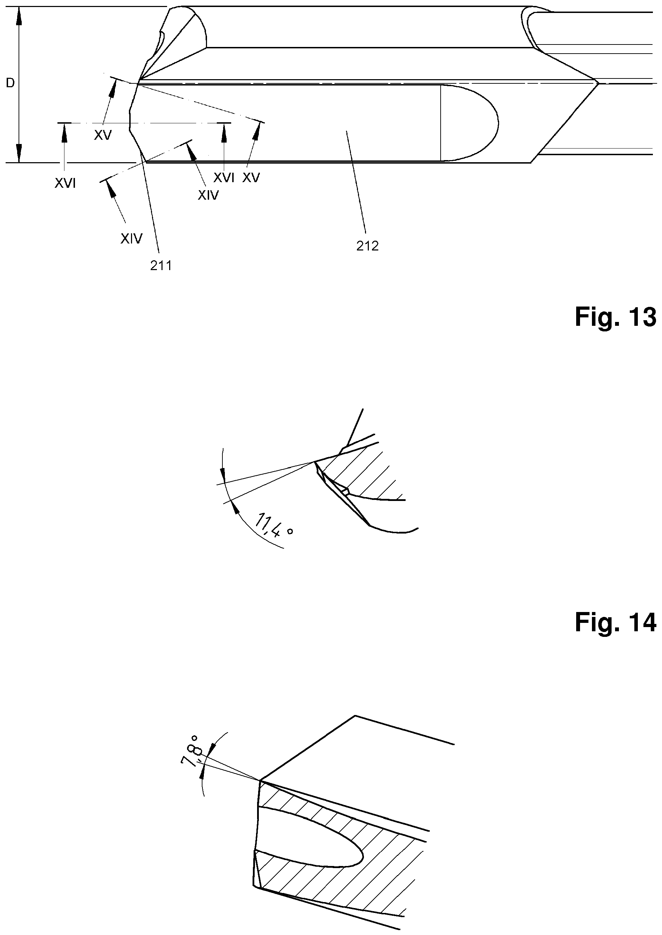

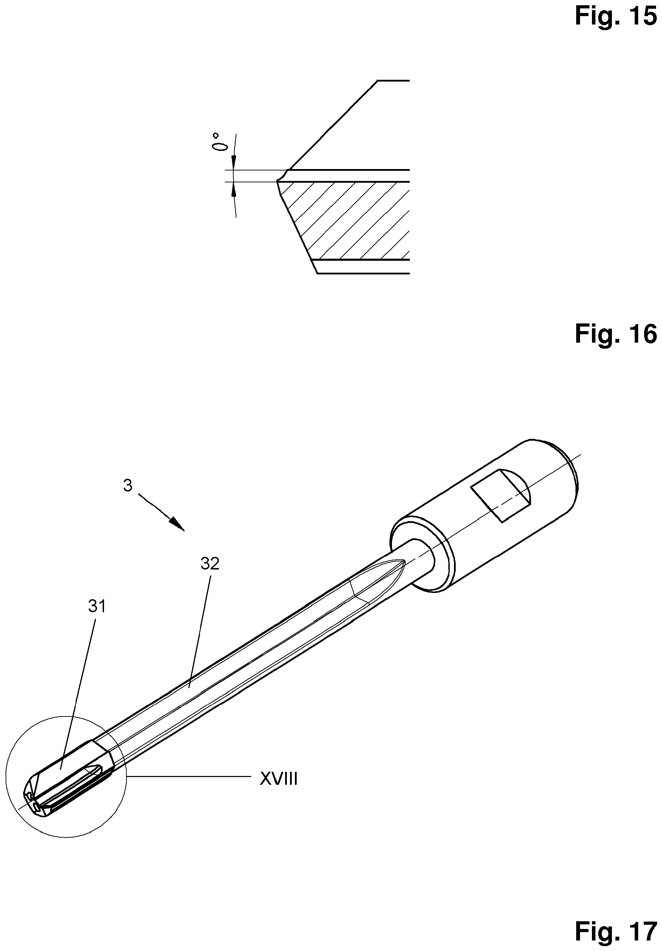

Ein Einlippentieflochbohrer 2 gemäß einer bevorzugten Ausführungsform der Erfindung ist in den Fig. 7 bis 9 dargestellt. Eine Aufsicht auf seinen Bohrkopf 21 entlang der Bohrermittelachse ist in Fig. 10 gezeigt. Ein Schnitt des Bohrkopfes 21 entlang der Linie, welche in Fig. 9 mit XI bezeichnet ist, ist in Fig. 11 gezeigt. Ein Schnitt des Bohrerschaftes 22 entlang der Linie, welche in Fig. 9 mit XII bezeichnet ist, ist in Fig. 12 gezeigt. Es ist zu erkennen, dass die Spanfläche 212, wie in Fig. 11 gezeigt, bis einschließlich zur Bohrerschneide 211, wie in Fig. 10 gezeigt, in einem ersten Bereich 2121 über den größten Teil des Radius des Bohrkopfes 21, d.h. von der Umfangsfläche des Bohrkopfes 21 bis zur Bohrermittelachse stetig streng konkav verläuft. Die Spanfläche 212 des Bohrkopfes 21 erstreckt sich über die Bohrermittelachse hinaus, wobei ein Bereich 2122 der Spanfläche 212 nicht gekrümmt ist, sondern planar verläuft. Der Bereich 2122 erstreckt sich dabei sowohl über die Bohrermittelachse hinaus, als auch von der Bohrermittelachse in Richtung Nebenschneide des Bohrers mit der Breite A. Entlang der Nebenschneide erstreckt sich ein planarer Bereich 2123 der Spanfläche mit der Breite B. Somit ergibt sich eine Breite des konkaven Bereichs von C = (D/2) - A - B, wobei C vorzugsweise 95 % von (D/2) beträgt. Die planaren Bereiche 2122 und 2123 erleichtern die Fertigung des erfindungsgemäßen Einlippenbohrers 2. Alternativ kann auch vorgesehen sein, dass sich der konkave Bereich 2121 der Spanfläche bis zur Bohrermittelachse oder bis zum Umfang des Bohrkopfes erstreckt. Somit kann vorgesehen sein, dass die planaren Bereiche 2122 oder 2123 nicht am Bohrkopf ausgebildet sind. Die Spanabfuhrnut 221 des Bohrerschaftes 22 ist, wie in Fig. 12 zu erkennen ist, nicht konkav ausgebildet. Fig. 13 zeigt eine Seitenansicht des Bohrkopfes 21 des Einlippenbohrers 2 gemäß dieser Ausführungsform der Erfindung. Wie dargestellt, erstreckt sich der konkave Bereich 2121 der Spanfläche 212 von der Bohrerschneide 211 ausgehend nur über einen Teil der Länge des Bohrkopfes 21, er könnte sich prinzipiell aber auch über die gesamte Länge des Bohrkopfes erstrecken. Eine Schnittansicht gemäß der in Fig. 13 mit XIV bezeichneten Linie ist in Fig. 14 dargestellt. Es ist zu erkennen, dass die konkave Krümmung der Spanfläche 212 und der Schneide 211 zum Bohrerumfang hin mit einem Winkel von 11,4° ausläuft. Fig. 15 zeigt eine Schnittansicht des Bohrerkopfes gemäß der Linie, welche in Fig. 13 entlang der mit XV bezeichneten Linie verläuft. Es ist zu erkennen, dass die konkave Krümmung der Spanfläche 212 und der Schneide 211 zur Bohrermittelachse hin mit einem Winkel von 7,8° ausläuft. Ein Schnitt des Bohrkopfes entlang der in Fig. 13 mit XVI bezeichneten Linie ist in Fig. 16 dargestellt. Im tiefsten Punkt der Spanfläche 212 beträgt ihre Krümmung 0°. Bei gleicher Vorschubkraft von 500 N, gleichem Drehmoment von 2,5 Nm und einem Bohrdurchmesser von 10 mm wie bei dem zuvor beschriebenen herkömmlichen Einlippenbohrer 1 erreicht der Einlippenbohrer 2 gemäß der ersten Ausführungsform der Erfindung eine Vorschubgeschwindigkeit von 160 mm/min.

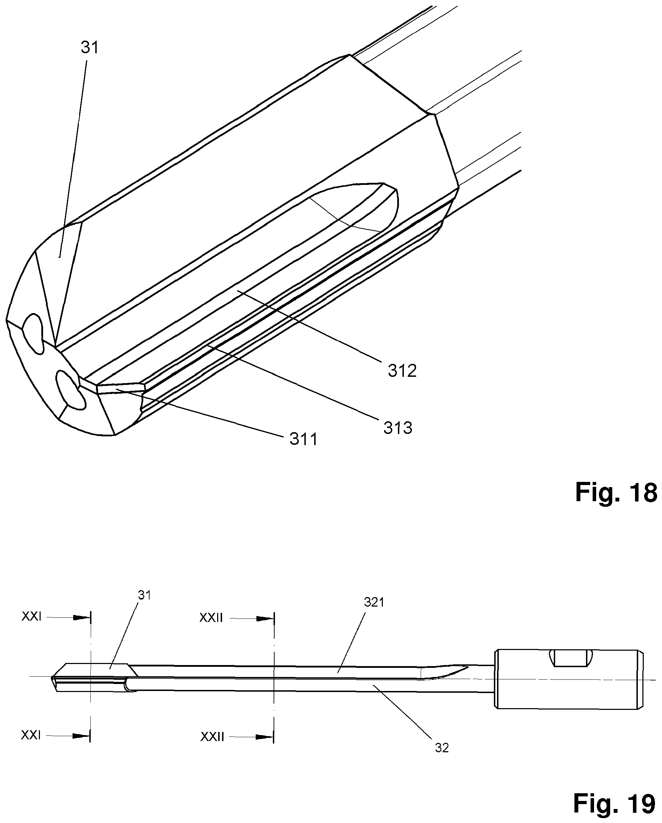

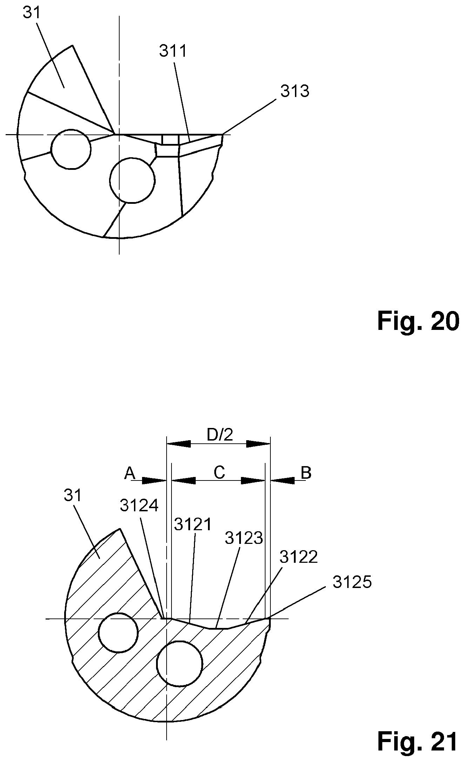

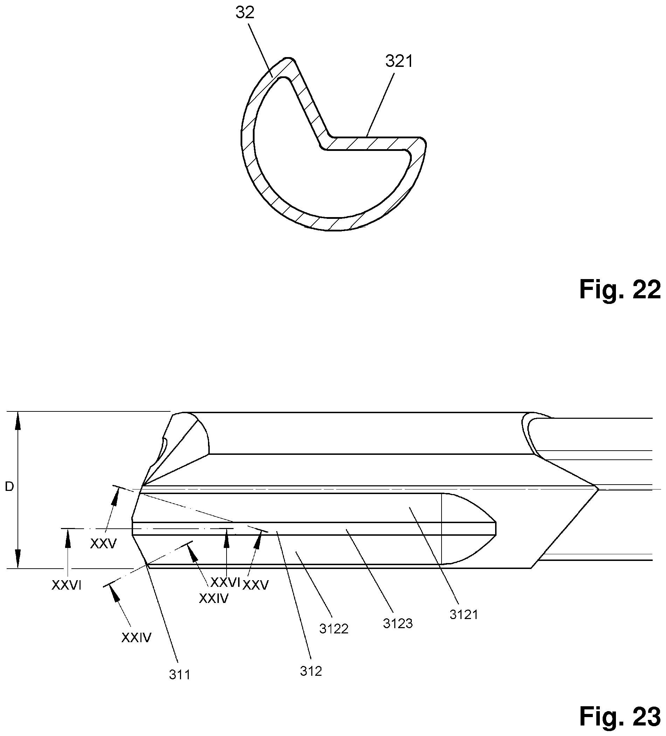

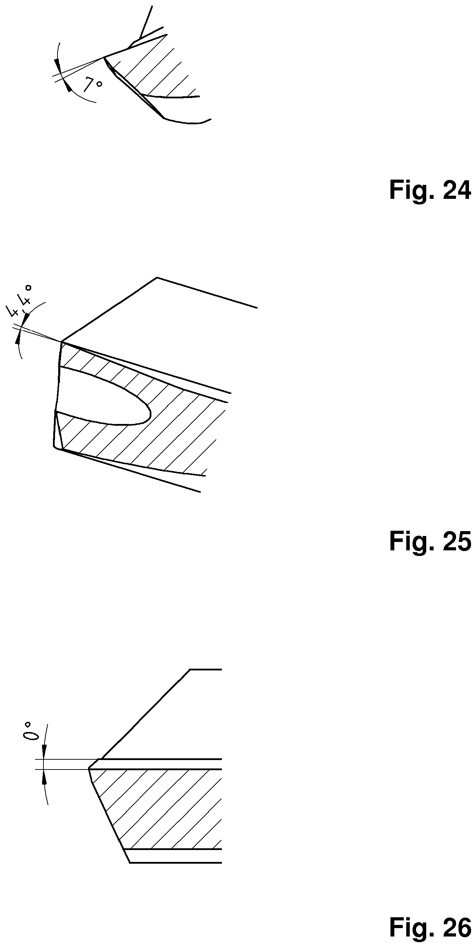

Ein Einlippentieflochbohrer 3 gemäß einer anderen Ausführungsform der Erfindung ist in den Fig. 17 bis 19 dargestellt. Eine Aufsicht auf seinen Bohrkopf 31 entlang der Bohrermittelachse wird in Fig. 17 gezeigt. Ein Schnitt des Bohrkopfes 31 entlang der in Fig. 19 mit XX bezeichneten Linie wird in Fig. 20 gezeigt. Ein Schnitt des Bohrerschaftes 32 entlang der in Fig. 19 mit XXI bezeichneten Linie wird in Fig. 21 gezeigt. Die Spanabfuhrnut 321 des Bohrerschaftes 32 ist, wie in der ersten Ausführungsform der Erfindung, nicht konkav ausgebildet. An die Schneide 311 schließt sich die Nebenschneide 313 an, die sich im Wesentlichen in Achsrichtung des Bohrers erstreckt und die Spanfläche zum Umfang des Bohrers begrenzt. In den Fig. 20 und 21 ist zu erkennen, dass sich die Spanfläche 312 des Einlippenbohrers 3 gemäß dieser Ausführungsform der Erfindung aus fünf Teilspanflächen 3121, 3122, 3123, 3124, 3125 zusammensetzt. Eine der Bohrermittelachse am nächsten liegende erste Spanfläche 3121 verläuft entlang dem Radius des Bohrkopfes 31. Die der Umfangsfläche des Bohrkopfes 31 am nächsten liegende zweite Teilspanfläche 3122 weist dieselbe Breite auf wie die erste Teilspanfläche 3121. Eine dritte Teilspanfläche 3123, welche kürzer ist als die erste Teilspanfläche 3121 und die zweite Teilspanfläche 3122, verbindet diese beiden miteinander. Der Winkel zwischen der ersten Teilspanfläche 3121 und der dritten Teilspanfläche 3123 und der Winkel zwischen der zweiten Teilspanfläche 3122 und der dritten Teilspanfläche 3123 sind gleich groß. Diese drei Teilspanflächen 3121, 3122, 3123 verleihen der Spanfläche 312 gemeinsam eine konkave Krümmung. Eine vierte Teilspanfläche 3124, welche teilweise auf der der ersten Teilspanfläche 3121 abgewandten Seite der Bohrermittelachse liegt, ist wie der Bereich 2122 der Spanfläche 212 des Einnlippenbohrers 2 gemäß der ersten Ausführungsform der Erfindung nicht an der konkaven Krümmung beteiligt. Der Bereich 3124 erstreckt sich dabei sowohl über die Bohrermittelachse hinaus, als auch von der Bohrermittelachse in Richtung Nebenschneide des Bohrers mit der Breite A. Entlang der Nebenschneide erstreckt sich ein planarer Bereich 3125 der Spanfläche mit der Breite B. Somit ergibt sich eine Breite des konkaven Bereichs von C = (D / 2) - A - B, wobei C vorzugsweise 95 % von (D / 2) beträgt. Die planaren Bereiche 3124 und 3125 erleichtern die Fertigung des erfindungsgemäßen Einlippenbohrers 3. Alternativ kann auch vorgesehen sein, dass sich der konkave Bereich der Teilspanflächen 3121, 3122 und 3123 bis zur Bohrermittelachse oder bis zum Umfang des Bohrkopfes erstreckt. Somit kann vorgesehen sein, dass die Teilspanflächen 3124 oder 3125 nicht am Bohrkopf ausgebildet sind. Fig. 23 zeigt eine Seitenansicht des Bohrkopfes des Einlippenbohrers gemäß dieser Ausführungsform der Erfindung. Wie dargestellt, erstreckt sich der konkave Bereich der Spanfläche 312 von der Bohrerschneide 311 ausgehend nur über einen Teil der Länge des Bohrkopfes 31, er könnte sich prinzipiell aber auch über die gesamte Länge des Bohrkopfes erstrecken. Ein Schnitt entlang der in Fig. 23 mit XXIV bezeichneten Linie ist in Fig. 24 dargestellt. Dort ist zu erkennen, dass die zweite Teilspanfläche 3122 und der dieser zugeordnete Teil der Schneide 311 zum Umfang des Bohrkopfes 31 hin mit einem Winkel von 7° auslaufen. Ein Schnitt entlang der in Fig. 23 mit XXV bezeichneten Linie ist in Fig. 25 dargestellt. Dort ist zu erkennen, dass die erste Teilspanfläche 3121 und der dieser zugeordnete Teil der Schneide 311 zur Bohrermittelachse hin mit einem Winkel von 4,4° auslaufen. Ein Schnitt entlang der in Fig. 23 mit XXVI bezeichneten Linie ist in Fig. 26 dargestellt. Dort ist ein Winkel der dritten Teilspanfläche 3123 von 0° zu erkennen. Der Einlippenbohrer 3 gemäß der zweiten Ausführungsform der Erfindung weist ebenso wie der Einlippenbohrer 2 gemäß der ersten Ausführungsform der Erfindung bei einem Durchmesser des Bohrkopfes 31 von 10 mm, einer Vorschubkraft von 500 N und einem Drehmoment von 2,5 Nm eine gegenüber der Vorschubgeschwindigkeit des herkömmlichen Einlippenbohrers 1 von 100 mm/min verbesserte Vorschubgeschwindigkeit von 160 mm/min auf. Auch alle weiteren Vorteile des Einlippenbohrers 2 gemäß der ersten Ausführungsform der Erfindung sind ebenfalls in der zweiten Ausführungsform der Erfindung realisiert.

Die Bohrergeometrie gemäß den beschriebenen Ausführungsformen der Erfindung ermöglicht es also, im Vergleich zur herkömmlichen Bohrergeometrie einen Einlippenbohrer 2, 3 mit reduzierter Schnittkraft, geringem Bohrungsmittenverlauf und längerer Standzeit bereitzustellen.

## Patentansprüche

1. Einlippentieflochbohrer (2, 3) mit wenigstens einer an einem Bohrkopf (21, 31) ausgebildeten Schneide (211, 311), wobei seine Spanfläche (212, 213) über mindestens 75 % ihrer Breite und im wesentlichen über ihre gesamte Länge in Radialrichtung konkav ausgebildet ist, wobei die Spanfläche (212, 213) einen planaren Bereich (2123) der Breite B, der sich entlang der Nebenschneide erstreckt, aufweist, **dadurch gekennzeichnet, dass** die Spanfläche (212) weiter einen planaren Bereich (2122), der sich sowohl über die Bohrermittelachse hinaus als auch von der Bohrermittelachse in Richtung der Nebenschneide des Einlippenbohrers (2, 3) mit der Breite A erstreckt, und einen zwischen den planaren Bereichen (2122, 2123) angeordneten konkaven Bereich (2121) der Breite C = (D/2 - A - B) bei einem Durchmesser D des Einlippentieflochbohrers (2, 3) aufweist, wobei C mindestens 95 % von D/2 beträgt, und dass die Spanfläche bis einschließlich zu der Schneide (211, 311) hin konkav ausgebildet ist.

2. Einlippentieflochbohrer (2, 3) mit wenigstens einer an einem Bohrkopf (21, 31) ausgebildeten Schneide (211, 311), wobei seine Spanfläche (212, 213) über mindestens 75 % ihrer Breite und im wesentlichen über ihre gesamte Länge in Radialrichtung konkav ausgebildet ist, wobei die Spanfläche (212) einen planaren Bereich (2123) der Breite B aufweist, der sich entlang der Nebenschneide erstreckt, **dadurch gekennzeichnet, dass** die Spanfläche bis einschließlich zu der Schneide (211, 311) hin konkav ausgebildet ist und dass die konkave Krümmung der Spanfläche (212, 312) in Radialrichtung an der Bohrermittelachse endet.

3. Einlippentieflochbohrer (2, 3) mit wenigstens einer an einem Bohrkopf (21, 31) ausgebildeten Schneide (211, 311), wobei seine Spanfläche (212, 213) über mindestens 75 % ihrer Breite und im wesentlichen über ihre gesamte Länge in Radialrichtung konkav ausgebildet ist, **dadurch gekennzeichnet, dass** die Spanfläche (212) einen planaren Bereich (2122), der sich sowohl über die Bohrermittelachse hinaus als auch von der Bohrermittelachse in Richtung der Nebenschneide des Einlippentieflochbohrers (2, 3) mit der Breite A erstreckt, dass die Spanfläche bis einschließlich zu der Schneide (211, 311) hin konkav ausgebildet ist und dass die konkave Krümmung der Spanfläche (212, 312) in Radialrichtung am Umfang des Bohrers endet.

4. Einlippentieflochbohrer nach einem der Ansprüche 1 bis 3, **dadurch gekennzeichnet, dass** die konkave Krümmung der Spanfläche (312) aus mindestens drei ebenen Teilspanflächen (3121, 3122, 3123) besteht, die gemeinsam in Radialrichtung eine konkave Kontur bilden.

5. Einlippentieflochbohrer nach Anspruch 1 oder 2 oder 3, **dadurch gekennzeichnet, dass** die Schneide (211, 311) einen positiven Spanwinkel aufweist.

6. Einlippentieflochbohrer nach Anspruch 1 oder 2 oder 3, **dadurch gekennzeichnet, dass** die Schneide (211, 311) in Vorschubrichtung eine konvex gekrümmte Kontur aufweist und dass ein Punkt der konvexen Kontur, der am weitesten in Vorschubrichtung gelegen ist, in einem Abstand zum Umfang des Bohrkopfes (21, 31) angeordnet ist, der einem Fünftel bis einem Drittel des Bohrdurchmessers entspricht.

7. Einlippentieflochbohrer nach einem der Ansprüche 1 bis 6, **dadurch gekennzeichnet, dass** der Bohrkopf (21, 31) keinen Spanbrecher aufweist.

8. Einlippentieflochbohrer nach einem der Ansprüche 1 bis 7, **dadurch gekennzeichnet, dass** der Bohrkopf (21, 31) zumindest teilweise mit einer Hartstoffschicht beschichtet ist.

9. Einlippentieflochbohrer nach Anspruch 8, **dadurch gekennzeichnet, dass** der Bohrkopf (21, 31) vollständig beschichtet ist.

10. Einlippentieflochbohrer nach Anspruch 8, **dadurch gekennzeichnet, dass** wenigstens die Spanfläche (212, 312) und der Umfang des Bohrkopfes (21, 31) beschichtet sind.

11. Einlippentieflochbohrer nach einem der vorangegangenen Ansprüche, **dadurch gekennzeichnet, dass** sowohl Bohrkopf (21, 31) als auch Schaft (22, 32) aus Hartmetall bestehen.

12. Einlippentieflochbohrer nach einem der vorangegangenen Ansprüche, **dadurch gekennzeichnet, dass** Bohrkopf (21, 31) und Schaft (22, 32) einstückig ausgebildet sind.

## Claims

1. Single-fluted deep hole drill (2, 3) having at least one cutting edge (211, 311) formed on a drill head (21, 31), wherein its cutting face (212, 213) is concave in the radial direction over at least 75% of its width and substantially over its entire length, wherein the cutting face (212, 213) has a planar region (2123) of width B, which extends along the secondary cutting edge, **characterised in that** the cutting face (212) also has a planar region (2122), which extends beyond the drill central axis and from the drill central axis in the direction of the secondary cutting edge of the single-fluted drill (2, 3) with width A,
and has a concave region (2121), arranged between the planar regions (2122, 2123), of width C = (D/2 - A - B) for a diameter D of the single-fluted deep hole drill (2, 3), wherein C is at least 95% of D/2, and the cutting face is formed as concave up to and including the cutting edge (211, 311).

2. Single-fluted deep hole drill (2, 3) having at least one cutting edge (211, 311) formed on a drill head (21, 31), wherein its cutting face (212, 213) is concave in the radial direction over at least 75% of its width and substantially over its entire length, wherein the cutting face (212) has a planar region (2123) of width B, which extends along the secondary cutting edge, **characterised in that**
the cutting face is formed as concave up to and including the cutting edge (211, 311) and the concave curvature of the cutting face (212, 312) ends in the radial direction at the drill central axis.

3. Single-fluted deep hole drill (2, 3) having at least one cutting edge (211, 311) formed on a drill head (21, 31), wherein its cutting face (212, 213) is concave in the radial direction over at least 75% of its width and substantially over its entire length, **characterised in that** the cutting face (212) has a planar region (2122) which extends beyond the drill central axis and from the drill central axis in the direction of the secondary cutting edge of the single-fluted deep hole drill (2, 3) with width A, the cutting face is formed as concave up to and including the cutting edge (211, 311), and the concave curvature of the cutting face (212, 312) ends in the radial direction at the periphery of the drill.

4. Single-fluted deep hole drill according to one of claims 1 to 3, **characterised in that** the concave curvature of the cutting face (312) consists of at least three flat partial cutting faces (3121, 3122, 3123), which together form a concave contour in the radial direction.

5. Single-fluted deep hole drill according to claim 1 or 2 or 3, **characterised in that** the cutting edge (211, 311) has a positive cutting angle.

6. Single-fluted deep hole drill according to claim 1 or 2 or 3, **characterised in that** the cutting edge (211, 311) has a convexly curved contour in the feed direction, and a point of the convex contour, which is located furthest in the feed direction, is arranged at a distance from the periphery of the drill head (21, 31) which corresponds to a fifth to a third of the drill diameter.

7. Single-fluted deep hole drill according to one of claims 1 to 6, **characterised in that** the drill head (21, 31) does not have a chip breaker.

8. Single-fluted deep hole drill according to one of claims 1 to 7, **characterised in that** the drill head (21, 31) is at least partially coated with a hard material layer.

9. Single-fluted deep hole drill according to claim 8, **characterised in that** the drill head (21, 31) is completely coated.

10. Single-fluted deep hole drill according to claim 8, **characterised in that** at least the cutting face (212, 312) and the periphery of the drill head (21, 31) are coated.

11. Single-fluted deep hole drill according to one of the preceding claims, **characterised in that** both the drill head (21, 31) and the shank (22, 32) consist of hard metal.

12. Single-fluted deep hole drill according to one of the preceding claims, **characterised in that** the drill head (21, 31) and the shank (22, 32) are formed in one piece.

## Revendications

1. Foret 3/4 à une lèvre pour trou profond (2, 3) comportant au moins une lame (211, 311) conçue sur une tête de forage (21, 31), sa face de coupe (212, 213) étant conçue concave dans le sens radial sur au moins 75 % de sa largeur et sensiblement sur toute sa longueur, ladite face de coupe (212, 213) présentant une zone plane (2123) de largeur B, qui s'étend le long de la lame secondaire, **caractérisé en ce que** la face de coupe (212) présente encore une zone plane (2122), qui s'étend à la fois au-delà de l'axe médian du foret et à partir de cet axe médian en direction de la lame secondaire du Foret 3/4 à une lèvre (2, 3) selon la largeur A, et une zone concave (2121) située entre les zones planes (2122, 2123) selon une largeur C = (D/2 - A - B) pour un diamètre D du Foret 3/4 à une lèvre pour trou profond (2, 3), C faisant au moins 95 % de D/2, et **en ce que** la face de coupe est conçue concave jusqu'à la lame (211, 311), inclusivement.

2. Foret 3/4 à une lèvre pour trou profond (2, 3) comportant au moins une lame (211, 311) conçue sur une tête de forage (21, 31), sa face de coupe (212, 213) étant conçue concave dans le sens radial sur au moins 75 % de sa largeur et sensiblement sur toute sa longueur, ladite face de coupe (212) présentant une zone plane (2123) de largeur B, qui s'étend le long de la lame secondaire, **caractérisé en ce que** la face de coupe est conçue concave jusqu'à la lame (211, 311), inclusivement, et **en ce que** la courbure concave de la face de coupe (212, 312) dans le sens radial se termine sur l'axe médian du foret.

3. Foret 3/4 à une lèvre pour trou profond (2, 3) comportant au moins une lame (211, 311) conçue sur une tête de forage (21, 31), sa face de coupe (212, 213) étant conçue concave dans le sens radial sur au moins 75 % de sa largeur et sensiblement sur toute sa longueur, **caractérisé en ce que** la face de coupe (212) présente une zone plane (2122) qui s'étend à la fois au-delà de l'axe médian du foret et à partir de cet axe médian en direction de la lame secondaire du Foret 3/4 à une lèvre pour trou profond (2, 3) selon la largeur A, **en ce que** la face de coupe est conçue concave jusqu'à la lame (211, 311), inclusivement, et **en ce que** la courbure concave de la face de coupe (212, 312) dans le sens radial se termine au niveau du pourtour du foret.

4. Foret 3/4 à une lèvre pour trou profond selon l'une des revendications 1 à 3, **caractérisé en ce que** la courbure concave de la face de coupe (312) se compose d'au moins trois faces de coupe partielles plates (3121, 3122, 3123) formant conjointement un contour concave dans le sens radial.

5. Foret 3/4 à une lèvre pour trou profond selon la revendication 1, 2 ou 3, **caractérisé en ce que** la lame (211, 311) présente un angle de coupe positif.

6. Foret 3/4 à une lèvre pour trou profond selon la revendication 1, 2 ou 3, **caractérisé en ce que** la lame (211, 311) présente un contour à courbure convexe dans le sens de l'avancée et **en ce qu'**un point dudit contour convexe, qui est le plus éloigné dans le sens de l'avancée, est disposé écarté du pourtour de la tête de forage (21, 31) selon une distance allant du cinquième au tiers du diamètre du foret.

7. Foret 3/4 à une lèvre pour trou profond selon l'une des revendications 1 à 6, **caractérisé en ce que** la tête de forage (21, 31) ne présente pas de brise-copeaux.

8. Foret 3/4 à une lèvre pour trou profond selon l'une des revendications 1 à 7, **caractérisé en ce que** la tête de forage (21, 31) est revêtue au moins partiellement d'une couche de matière dure.

9. Foret 3/4 à une lèvre pour trou profond selon la revendication 8, **caractérisé en ce que** la tête de forage (21, 31) est totalement revêtue.

10. Foret 3/4 à une lèvre pour trou profond selon la revendication 8, **caractérisé en ce qu'**au moins la face de coupe (212, 312) et le pourtour de la tête de forage (21, 31) sont revêtus.

11. Foret 3/4 à une lèvre pour trou profond selon l'une quelconque des revendications précédentes, **caractérisé en ce que** la tête de forage (21, 31) ainsi que la tige (22, 32) se composent de métal dur.

12. Foret 3/4 à une lèvre pour trou profond selon l'une quelconque des revendications précédentes, **caractérisé en ce que** la tête de forage (21, 31) et la tige (22, 32) sont conçues d'un seul tenant.
